# EUROPÄISCHE PATENTSCHRIFT

(11) **EP 0 906 844 B1**
(45) Veröffentlichungstag und Bekanntmachung des Hinweises auf die Patenterteilung: **20.03.2002**
(21) Anmeldenummer: 98117438.6
(22) Anmeldetag: 15.09.1998
(51) Int. Cl.: B60K 15/04, B60K 15/077

(54) **Kraftstoffbehälter für ein Kraftfahrzeug**
Fuel tank for a motor vehicle
Réservoir de carburant d'un véhicule automobile

(30) Priorität: 01.10.1997 DE 19743487
(43) Veröffentlichungstag der Anmeldung: 07.04.1999
(73) Patentinhaber: Bayerische Motoren Werke Aktiengesellschaft, 80788 München (DE)
(72) Erfinder: Scholz, Martin, 85716 Unterschleissheim (DE)

(56) Entgegenhaltungen:
- GB-A- 2 283 011

## Beschreibung

Die Erfindung betrifft einen Kraftstoffbehälter für ein Kraftfahrzeug gemäß dem Oberbegriff des Anspruchs 1, welcher auf der GB-A-2 283 011 basiert.

In einigen Ländern ist es gesetzlich vorgeschrieben, daß aus dem Einfüllrohr eines Kraftstoffbehälters während der Betankung keine Kraftstoffdämpfe austreten dürfen. Dies kann beispielsweise durch eine Flüssigkeitsabdichtung erreicht werden, bei der ein Höhenunterschied zwischen dem Kraftstoffbehälter und einer Befüllöffnung des Einfüllrohres ausreichend groß ist, so daß der im Kraftstoffbehälter auf die behälterseitige Öffnung des Einfüllrohres wirkende statische Flüssigkeitsdruck bis zum Erreichen einer maximalen Füllstandshöhe überwunden werden kann. Ist der Höhenunterschied zu gering und/oder das Einfüllrohr zu kurz und/oder baut der Kraftstoffbehälter zu flach, so verhindert der im Kraftstoffbehälter auf die Öffnung des Einfüllrohres wirkende Flüssigkeitsdruck, daß der Kraftstoffbehälter vollständig betankbar ist.

Aufgabe der Erfindung ist es, einen Kraftstoffbehälter für ein Kraftfahrzeug zu schaffen, der immer vollständig betankbar ist, ohne daß Kraftstoffdämpfe während der Betankung aus dem Einfüllrohr des Kraftstoffbehälters entweichen.

Diese Aufgabe wird durch die Merkmale des Anspruchs 1 gelöst.

Der erfindungsgemäße Kraftstoffbehälter ermöglicht durch die Ausbildung einer Bypass- oder Zusatzleitung an einem bis zum Boden des Kraftstoffbehälters verlängerten Einfüllrohr, daß bei der Betankung der Kraftstoff über die Zusatzleitung in den Kraftstoffbehälter fließen kann, wenn der auf die behälterseitige Öffnung des Einfüllrohres wirkende Flüssigkeitsdruck zu hoch ist. Vorteilhafterweise ist die Zusatzleitung an der höchstmöglichen Stelle des behälterseitigen Abschnittes des Einfüllrohres angeordnet. Die jeweilige Austrittsöffnung des Einfüllrohres bzw. der Zusatzleitung ist mit einem schnellschließenden Ventil versehen, das bereits bei einem geringen Druck öffnet. Dadurch wird zum einen ein Zurückschwappen von Kraftstoff zur Befüllöffnung des Einfüllrohres verhindert und gleichzeitig wird zum anderen der Druckverlust zum Öffnen des Ventils beim Betankungsvorgang minimiert. Die Ventile sind vorteilhafterweise mit einem federbelasteten Ventilschließkörper versehen. Dabei kann der Ventilschließkörper als Kugel, Kegel oder als Klappe ausgebildet sein. Durch die Verwendung eines federbelasteten Ventilschließkörpers ist der Einbau des Ventils lageunabhängig. Bei einer weiteren vorteilhaften Ausführungsform ist das Ventil der Zusatzleitung mit einem Schwimmer versehen, der bei Erreichen der maximalen Füllstandshöhe ausreichend schnell die Öffnung der Zusatzleitung verschließt.

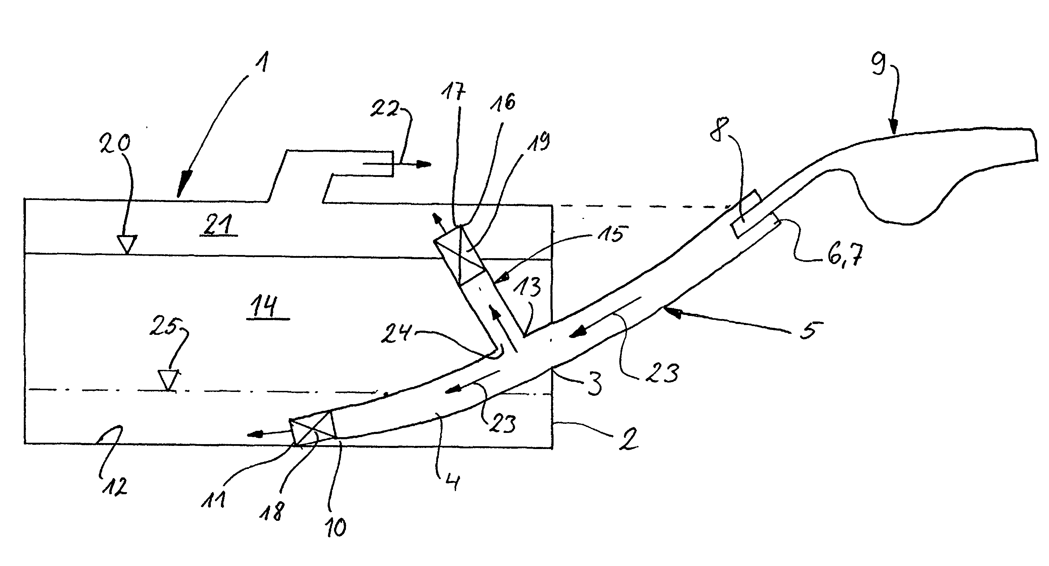

Eine Ausführungsform der Erfindung wird nachstehend anhand der einzigen Figur beispielshalber beschrieben. Die Figur zeigt eine Prinzipdarstellung eines Kraftstoffbehälters 1 eines nicht dargestellten Kraftfahrzeuges. Durch eine Behälterwand 2 des Kraftstoffbehälters 1 ist in einer Öffnung 3 ein Abschnitt 4 eines Einfüllrohres 5 hindurchgeführt. An einem oberen, in der Nähe der Außenhaut des Kraftfahrzeuges ausgebildeten Ende 6 des Einfüllrohres 5 ist eine mit einem nicht dargestellten Deckel verschließbare Öffnung 7 vorgesehen. In diese Öffnung 7 ragt beim Betankungsvorgang das Rohr 8 einer Zapfpistole 9. Gegenüberliegend zu der Befüllöffnung 7 ist an einem unteren Ende 10 des Einfüllrohres 5 eine Austrittsöffnung 11 strömungsgünstig an einem Boden 12 des Kraftstoffbehälters 1 ausgebildet. An der höchstmöglichen Stelle 13 des sich in dem Innenraum 14 befindlichen Abschnittes 4 des Einfüllrohres 5 ist eine Bypass- oder Zusatzleitung 15 an dem Einfüllrohr 5 angeschlossen. An dem freien Ende 16 der Zusatzleitung 15 ist eine Austrittsöffnung 17 vorgesehen. In den beiden Austrittsöffnungen 11, 17 ist jeweils ein Ventil 18, 19 angeordnet. Die Austrittsöffnung 17 bzw. das Ventil 19 der Zusatzleitung 15 befinden sich in der in der Figur gezeigten Ausführungsform oberhalb eines maximalen Kraftstoff-Füllstandes 20. In einer anderen Ausführungsform kann die Austrittsöffnung 17 der Zusatzleitung 15 unterhalb oder in der Höhe des maximalen Kraftstoff-Füllstandes 20 liegen. Oberhalb des maximalen Kraftstoff-Füllstandes 20 ist im Kraftstoffbehälter 1 ein Ausgleichsvolumen 21 vorgesehen. In einer anderen Ausführungsform ist das Ausgleichsvolumen 21 außerhalb des Kraftstoffbehälters 1 ausgebildet. Die in dem Ausgleichsvolumen 21 sich ansammelnden Kraftstoffdämpfe werden in Richtung des eingezeichneten Pfeiles 22 nach außen, beispielsweise zu einem Aktivkohlebehälter oder dergleichen, abgeführt.

Beim Betankungsvorgang strömt der durch Pfeile gekennzeichnete Kraftstoff 23 bei einem leeren Kraftstoffbehälter 1 an einer Eintrittsöffnung 24 der Zusatzleitung 15 vorbei, ohne daß Kraftstoff durch die Zusatzleitung 15 fließt. Ab einem bestimmten Befüllniveau 25, das in der Figur als eine strichpunktierte Linie eingezeichnet ist, ist der auf die Austrittsöffnung 11 des unteren Abschnittes 4 des Einfüllrohres 5 wirkende Flüssigkeitsdruck so groß, daß das Ventil 18 schließt und der Kraftstoff 23 über die Zusatzleitung 15 in den Kraftstoffbehälter 1 fließt. Das Ventil 19 der Zusatzleitung 15 ist so ausgelegt, daß das Ventil 19 beim Erreichen der maximalen Kraftstoff-Füllstandshöhe 20 sofort schließt. Der Öffnungsdruck zumindest des unteren Ventils 18 ist so gering wie möglich eingestellt, so daß ein vorzeitiges Abschalten der Zapfpistole 9 aufgrund eines zurückfließenden Kraftstoffes 23 ausgeschlossen ist. In der Regel liegt der Öffnungsdruck des oberen Ventils 19 der Zusatzleitung 15 in der Größenordnung des statischen Flüssigkeitsdruckes, bei dem das untere Ventil 18 geschlossen wird. In einer anderen Ausführungsform weisen die beiden Ventile 18, 19 den gleichen Öffnungsdruck auf, so daß der Kraftstoff 23 zumindest teilweise gleichzeitig über die beiden Leitungen bzw. Rohre 4, 15 in den Kraftstoffbehälter 1 fließen kann.

Zur Erreichen eines lageunabhängigen Einbaus der Ventile 18, 19 sind die Ventile in der Regel federbelastet. Der Ventilschließkörper der Ventile 18, 19 kann als eine Kugel, ein Kegel oder als eine Klappe ausgebildet sein, der von der entsprechenden Feder beaufschlagt wird. In einer anderen Ausführungsform ist das Ventil 19 der Zusatzleitung 15 als ein Schwimmerventil ausgebildet.

## Patentansprüche

1. Kraftstoffbehälter für ein Kraftfahrzeug, mit einem Einfüllrohr, wobei das Einfüllrohr an seinem karosserieseitigen Ende eine Befüllöffnung aufweist und wobei an seinem dazu gegenüberliegenden Ende eine Austrittsöffnung ausgebildet ist, wobei der Höhenunterschied zwischen der Befüllöffnung des Einfüllrohres und einem maximalen Kraftstoff-Füllstand im Kraftstoffbehälter so gering ist, daß der auf die Austrittsöffnung des Einfüllrohres beim Betankungsvorgang wirkende statische Flüssigkeitsdruck ein vollständiges Befüllen des Kraftstoffbehälters verhindert, und wobei das Einfüllrohr (5) einen bis zum Boden (12) des Kraftstoffbehälters (1) verlängerten Abschnitt (4) aufweist, und am Ende (10) des Abschnittes (4) eine mit einem Ventil (18) versehene Austrittsöffnung (11) ausgebildet ist, **dadurch gekennzeichnet, daß** an dem im Innenraum (14) des Kraftstoffbehälters (1) befindlichen Abschnitt (4) des Einfüllrohres (5) mindestens eine Zusatzleitung (15) angeschlossen ist, wobei die Austrittsöffnung (17) der jeweiligen Zusatzleitung (15) mit einem Ventil (19) versehen ist.

2. Kraftstoffbehälter nach Anspruch 1,
**dadurch gekennzeichnet, daß** die Zusatzleitung (15) an der höchstmöglichen Stelle (13) des Abschnittes (4) des Einfüllrohres (5) angeschlossen ist.

3. Kraftstoffbehälter nach den Ansprüchen 1 oder 2,
**dadurch gekennzeichnet, daß** die Ventile (18, 19) einen federbelasteten Ventilschließkörper aufweisen und daß der Ventilschließkörper als eine Kugel oder ein Kegel oder eine Klappe ausgebildet ist.

4. Kraftstoffbehälter nach den Ansprüchen 1 oder 2,
**dadurch gekennzeichnet, daß** das Schließen des Ventils (19) der Zusatzleitung (15) durch einen Schwimmer erfolgt.

## Claims

1. A fuel tank for a motor vehicle, with a filler tube, in which the filler tube has a filling opening at its bodywork side end and in which at its opposite end to this an outlet opening is formed, in which the height difference between the filling opening of the filler tube and a maximum fuel filling level in the fuel tank is so small that the static fluid pressure acting on the outlet opening of the filler tube would prevent complete filling of the fuel tank, and in which the filler tube (5) has an extended section (4) and an outlet opening (11) provided with a valve (18) is formed at the end (10) of the section (4),
**characterised in that** at least one additional pipe (15) is connected to the section (4) of the filler tube (5) positioned in the interior of the fuel tank (1), in which the outlet opening of the additional pipe (15) in question is provided with a valve (19).

2. A fuel tank according to Claim 1,
**characterised in that** the additional pipe (15) is connected at the highest possible position of the section (4) of the filler tube (5).

3. A fuel tank according to Claim 1 or Claim 2,
**characterised in that** the valves (18, 19) have a spring loaded valve closing element and that the valve closing element is formed as a ball or a cone or a flap.

4. A fuel tank according to Claim 1 or Claim 2,
**characterised in that** the closing of the valve (19) of the additional pipe (15) is effected by a float.

## Revendications

1. Réservoir de carburant pour un véhicule automobile comprenant une conduite de remplissage dont l'extrémité du côté de la carrosserie comporte un orifice de remplissage et l'autre extrémité, opposée comporte un orifice de sortie, la différence de hauteur entre l'orifice de remplissage de la conduite de remplissage et le niveau maximum de carburant dans le réservoir étant suffisamment réduite pour que la pression de liquide statique agissant sur l'orifice de sortie de la conduite de remplissage lors d'une opération de remplissage de réservoir ne permet pas un remplissage complet du réservoir, dont la conduite de remplissage (5) comporte un segment (4) qui prolonge la conduite jusqu'au niveau du fond (12) du réservoir (1), l'extrémité (10) du segment (4) ayant un orifice de sortie (11) muni d'une soupape (18),
**caractérisé en ce que**
le segment (4) de la conduite de remplissage (5) qui se trouve à l'intérieur (14) du réservoir (1) comporte au moins une conduite auxiliaire (15) dont l'orifice de sortie (17) est muni d'une soupape (19).

2. Réservoir de carburant pour un véhicule automobile selon la revendication 1,
**caractérisé en ce que**
la conduite auxiliaire (15) est reliée au point le plus haut possible (13) du segment (4) de la conduite de remplissage (5).

3. Réservoir de carburant pour un véhicule automobile selon l'une des revendications 1 ou 2,
**caractérisé en ce que**
les soupapes (18, 19) comportent un organe d'obturation chargé par un ressort et cet organe d'obturation est une bille, un cône ou un clapet.

4. Réservoir de carburant pour un véhicule automobile selon l'une des revendications 1 ou 2,
**caractérisé en ce que**
la fermeture de la soupape (19) de la conduite auxiliaire (15) est assurée par un flotteur.
